# EUROPÄISCHE PATENTSCHRIFT

(11) **EP 2 508 061 B1**
(45) Veröffentlichungstag und Bekanntmachung des Hinweises auf die Patenterteilung: **14.05.2014**
(21) Anmeldenummer: 12158565.7
(22) Anmeldetag: 08.03.2012
(51) Int. Cl.: A01D 34/66, A01D 34/76

(54) **Scheibenmähwerk**
Disc mower
Mécanisme de tonte à disques

(30) Priorität: 07.04.2011 DE 102011016285
(43) Veröffentlichungstag der Anmeldung: 10.10.2012
(73) Patentinhaber: CLAAS Saulgau GmbH, 88348 Bad Saulgau (DE)
(72) Erfinder: Ober, Martin, 78736 Epfendorf-Trichtingen (DE)

(56) Entgegenhaltungen:
- EP-A1- 1 002 458
- EP-A1- 1 776 855
- US-A- 5 463 852
- US-A1- 2003 136 218

## Beschreibung

Die Erfindung betrifft ein Scheibenmähwerk gemäß dem Oberbegriff des unabhängigen Anspruchs 1.

### Stand der Technik

Bekannt sind Scheibenmähwerke mit Mähbalken, welche die Antriebskette zum Antrieb der Mähscheiben in Form von nebeneinander liegenden Stirnrädern, die miteinander kämmen, in sich aufnehmen. Dabei befinden sich die Stirnräder innerhalb eines flachen abgekanteten Blechgehäuses, welches als Getriebewanne ausgebildet nach oben abgeschlossen mit einem Getriebewannendeckel verschraubt ist. Der Getriebewannendeckel nimmt dabei zugleich die Lagerstellen für die Antriebsritzel der Mähscheiben auf, wobei die Antriebsritzel ebenfalls mit den unterhalb des Getriebewannendeckels liegenden Stirnrädern kämmend in Eingriff stehen. Die Lagerstellen der Stirnräder stützen sich dabei einerseits am Boden der Getriebewanne und andererseits am Getriebewannendeckel ab. Damit der Boden der Getriebewanne aus Verschleißgründen keinen direkten Bodenkontakt bekommt, sind unterhalb der Mähscheiben sogenannte Gleitkufen als Verschleißteile angeordnet, welche den Boden von unten vollflächig abdecken und schützen. Nachteilig dabei ist die große Kontaktfläche mit dem Boden, welches im Betriebszustand des Mähens entsprechend hohe Reibungskräfte mit dem Boden verursacht und welches zudem den Nachteil in sich birgt, dass sich im sogenannten Zwickelbereich der sich überdeckenden Flugkreise der Mähklingen Schmutzansammlungen bilden, weil diese sich nicht von dem Mähbalken lösen können. EP 1 002 458 A1 offenbart ein Scheibenmähwerk mit mehreren umlaufend angetriebenen Mähscheiben, die einen Mähbalken bilden, welcher die Lagerung der Mähscheiben und die Lagerung der Antriebselemente des Antriebsstrangs aufnimmt, wobei der Antriebsstrang nebeneinander liegende Stirn- und Antriebsritzel umfasst und der Mähbalken wenigstens zwei außen nebeneinander liegende Mähscheiben mit gleichsinniger Drehrichtung aufweist, und wobei den wenigstens zwei außen liegenden gleichsinnig drehenden Mähscheiben drei Stirnräder als Teil des Antriebsstrangs zugeordnet sind, und ein erstes Stirnrad als Umkehrrad fungiert sowie ein Hauptantriebsritzel mit dem ersten Stirnrad in Eingriff und Antriebsverbindung steht und in Fahrt - und Arbeitsrichtung gesehen den Stirnrädern vorgelagert ist.

### Aufgabenstellung

Hier setzt die Aufgabe der Erfindung an mit dem Ziel, einen leichtzügigen wirtschaftlich verbesserten und damit kostengünstigeren Mähbalken mit zugleich verbesserten Mäheigenschaften vorzuschlagen, welcher getriebetechnisch, in Bezug auf die Einleitung und Übertragung des Antriebsdrehmoments an die Mähscheiben, in Bezug auf die Zielsetzung optimal ausgelegt und dessen räumliche Ausgestaltung und Formgebung darauf gerichtet sein soll, ein gleichmäßiges Mähbild über die gesamte Arbeitsbreite des Mähbalkens zu erzielen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Durch die Art der Ausgestaltung des Mähbalkens ist es möglich in der Summe mehrerer zusammenwirkender erfinderischer Ausgestaltungsmaßnahmen die Problemzonen im Zwickeleinlaufbereich und im Zwickelauslaufbereich der Mähklingenüberdeckungsflugkreise im Gleitkufenzwischenbereich erfolgreich zu bekämpfen, so dass dadurch in diesen Problemzonen die sich physikalisch bedingten anhäufenden Schmutzansammlungen unterdrückt werden können.

Dadurch wird vermieden, dass das noch stehende Mähgut durch diese Schmutzansammlungen, die sich vor dem Mähbalken herschieben, vorzeitig, d.h. bevor die Mähklingen dieses überhaupt erreichen können, an den Boden herangedrückt wird, welches dann die sogenannte Streifenbildung durch unnötig lange Stoppeln in diesen Problemzonen verursacht. Diesen Effekt - in Fachkreisen als Streifenbildung im Mähbild bezeichnet - zu unterdrücken ist durch die Summe der erfinderischen Maßnahmen erreicht, wobei die Erreichung dieser Ziele ganzheitlich in dem Lösungsansatz der erfinderischen Lösung enthalten ist.

Erfindungsgemäß weist der Mähbalken 1 eine Getriebewanne 2 auf, die als Ganzes aus einem Stück duktilen Material und insbesondere aus Stahlblech nach dem Formstanzverfahren geprägt ist.

Die so einstückig, d.h. monolitisch ausgeformte Getriebewanne 2 weist nicht nur einen umlaufenden Flansch 3 zur Aufnahme der Verbindungselemente zum Verschrauben mit dem Getriebewannendeckel 4 auf, sondern gleichermaßen die vorderen wellenförmigen Ausbuchtungen 5 zur Aufnahme der Zahnritzel 6 der Mähscheiben 7 und einen ebenfalls geprägten Getriebewannenboden 8 mit eingeprägten Erhöhungen 9, wobei die eingeprägten Erhöhungen 9 im Getriebewannenboden 8 sich im Anschluss an den Zwickelbereich 10 erstrecken. Der Zwickelbereich 10 ist definiert durch die sich überdeckenden Flugkreise 11 der Mähklingen. Somit ergibt sich ein freier Tunneldurchgang 12 unterhalb des Mähbalkens und gegenüber dem Erdboden bzw. der Grasnabe zum Durchlass von Schmutzansammlungen, die sich im Zwickelbereich 10 bilden können.

Möglich wird dieses erst dadurch, dass der Antriebsstrang 13, ausgebildet als Zahnradgetriebe, als Antriebskette 14 zum Antrieb der Mähscheiben in Form von nebeneinander liegenden Stirnrädern 15 und den in diese eingreifenden Zahnritzel 6 so ausgestaltet ist, dass innerhalb des Tunneldurchgangs keine Lagerstellen 17 für die Zwischenräder 18,18' erforderlich sind, welches den freien und ungestörten Tunneldurchgang ermöglicht. Die Getriebewanne ist dabei so geformt, dass es möglich ist, die Zahnritzel zum Antrieb der Mähscheiben so weit wie möglich in die Ausbuchtungen der Getriebewanne vorzurücken, um somit die Überdeckung der Flugkreise der Mähklingen zu maximieren. Dieses Vorrücken der Zahnritzel macht es auch möglich, den Teilkreisdurchmesser der Zwischenräder 18,18' zu maximieren, welches somit die Zahnkräfte und damit auch die Lagerkräfte und auch die Drehzahl der Zwischenräder 18,18' minimiert. Letzteres macht sich durch eine Minderung des Schallleistungspegels im Betriebszustand vorteilhaft bemerkbar. Hinzu kommt als vorteilhafte Wirkung, dass alle Zwischenräderpaarungen 20 untereinander gleich ausgebildet sind und die Drehachsen (32) aller Zwischenräder 18,18' in einer Fluchtlinie 19 liegen.

Damit alle Zwischenräderpaarungen 20 untereinander gleich ausgebildet werden können, ist einem der beiden außen liegenden Zwischenräderpaare das Hauptantriebsritzel 21 zur Einkopplung des Antriebsdrehmoments vorgelagert. Dabei ist zwischen dem Hauptantriebsritzel 21 und dem ersten benachbarten Zwischenräderpaar 20 ein weiteres Zwischenrad 22 angeordnet, so dass das Hauptantriebsdrehmoment über dieses weitere Zwischenrad 22 an das erste Zwischenräderpaar 20 weitergegeben wird.

Dabei ist das Hauptantriebsritzel 21 dem weiteren Zwischenrad 22 in Fahrt- bzw. Arbeitsrichtung F vorgelagert und liegt dabei im Bereich des Achsabstands 33 zwischen dem weiteren Zwischenrad 22 und dem ersten Zwischenrad 18 des benachbarten Zwischenräderpaars 20.

Die Lagerstelle 23 des Hauptantriebsritzels 21, des weiteren Zwischenrades 22 und des ersten benachbarten Zwischenrades 18 des Zwischenräderpaares 20 liegen dabei so zueinander, dass alle nachfolgenden Zwischenradpaare 20 ebenfalls aus den gleichen gegenläufig zueinander drehenden Zwischenrädern 18,18' bestehen, die demzufolge alle untereinander gleich ausgebildet sind.

Ein besonderer Vorteil der Erfindung besteht unter anderem auch darin, dass durch diese Ausgestaltung des Antriebsstrangs 13 jeweils in der Mitte zwischen zwei benachbarten Mähscheiben 7 keine Lagerstelle für ein Zwischenrad 18,18' liegt, wodurch der angesprochene freie Tunneldurchgang zwischen den Mähscheiben erst möglich ist.

Durch die wellenförmige Ausgestaltung der Vorderseite des Mähbalkens ist es zudem möglich, die Überdeckung der Flugkreise der Mähklingen im sogenannten Zwickelbereich zu vergrößern. Dieses wird dadurch ermöglicht, dass die Gleitkufenzwischenstücke der Form und Ausgestaltung des jeweiligen Zwickelbereichs im Wellental optimal angepasst werden, so dass die Gleitkufenzwischenstücke keilförmig ausgebildet unterschiedliche Geometrien aufweisen. Dieses ist davon abhängig, ob die Mähklingen sich während Ihres Umlaufs auf die Vorderkante des Mähbalkens zu- oder wegbewegen. Die unterschiedlichen Geometrien wiederum beruhen darauf, dass die Vorbaumaße der unterschiedlichen Gleitkufenzwischenstücke unterschiedlich sind, so dass die Keilwinkel und die Vorbaumaße unterschiedlich sind. Dieses verbessert nicht nur die Gleiteigenschaften des Mähbalkens insgesamt, sondern fördert die Vermeidung der sich aufbauenden Schmutzansammlungen in diesen kritischen Bereichen des Mähbalkens, welches zudem die hinderlichen Luftverwirbelungen an den Mähklingen minimiert damit das noch zu mähende Grünfutter nicht vorzeitig an den Boden gedrückt wird. Gerade dieses ist die Ursache der ungleichmäßigen Stoppellängen im Zwickelbereich und es erzeugt die sogenannte Streifenbildung im Mähbild des Scheibenmähwerks im gemähten Feld.

Das nachfolgend dargelegte Ausführungsbeispiel verdeutlicht dieses anhand der Figurendarstellungen und deren Beschreibung.

Es zeigen:
- Fig.1: eine perspektivische Draufsicht auf einen freigelegten Mähbalken des erfindungsgemäßen Scheibenmähwerks
- Fig.1a: eine Draufsicht gemäß Ansicht Y der Fig.1 auf einen Mähbalken des erfindungsgemäßen Scheibenmähwerks
- Fig.1b eine: Untenansicht gemäß Ansicht Z der Fig.1 auf einen Mähbalken des erfindungsgemäßen Scheibenmähwerks
- Fig.2: eine Schnittdarstellung gemäß dem Schnittverlauf A-A durch den Mähbalken gemäß Fig.1a
- Fig.3: eine Schnittdarstellung gemäß dem Schnittverlauf B-B durch den Mähbalken entsprechend Fig.1a
- Fig.4: eine Schnittdarstellung gemäß dem Schnittverlauf C-C durch den Mähbalken entsprechend Fig.1a
- Fig.5: eine Innenansicht eines offenen Getriebekastens eines Mähbalkens gemäß Fig.1a
- Fig.5a: einen Ausschnitt aus Fig.5 in vergrößerter Darstellung
- Fig.6: Draufsicht auf eine offene Getriebewanne
- Fig.7: Ansicht Y gemäß Fig.6
- Fig.8: perspektivische Draufsicht auf eine offene Getriebewanne
- Fig.9: Ansicht Z gemäß Fig.6
- Fig.10: Draufsicht auf eine offene Getriebewanne
- Fig.11: Längsschnitt Schnitt A-A gemäß Fig. 10
- Fig.12: Einzelheit X gemäß Fig.11 in vergrößerter Darstellung
- Fig.13: Querschnitt Schnitt B-B gemäß Fig.10 in vergrößerter Darstellung
- Fig.14: einen Ausschnitt eines Mähbalkens in einer Draufsicht
- Fig.15: einen Schnitt A-A durch einen Mähbalken im Zwickelbereich
- Fig.15a: ein Gleitkufenzwischenstück mit großem Vorbaumaß
- Fig.16: einen Schnitt B-B durch einen Mähbalken im Zwickelbereich
- Fig.16a: ein Gleitkufenzwischenstück mit kleinem Vorbaumaß

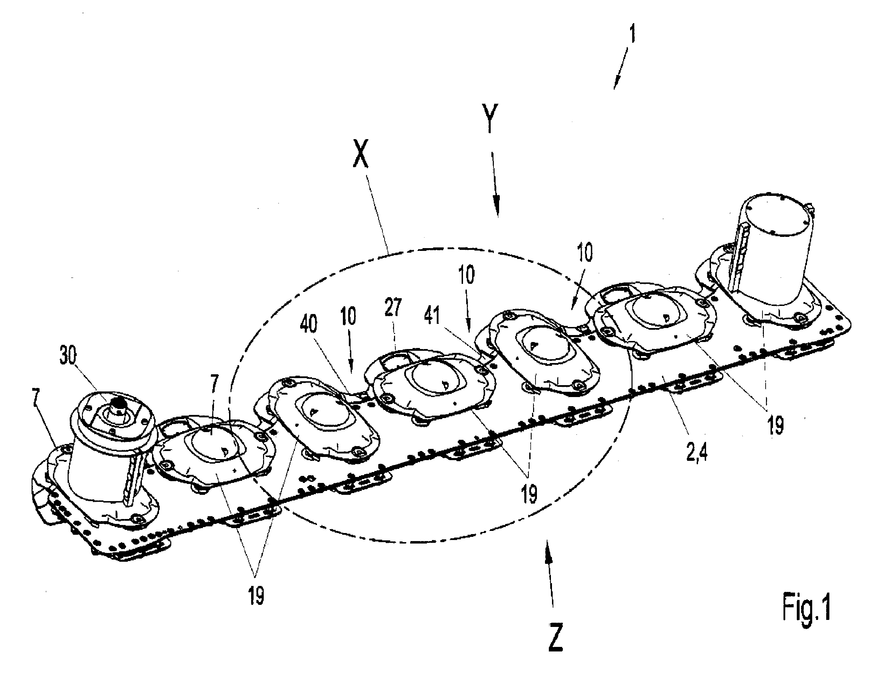

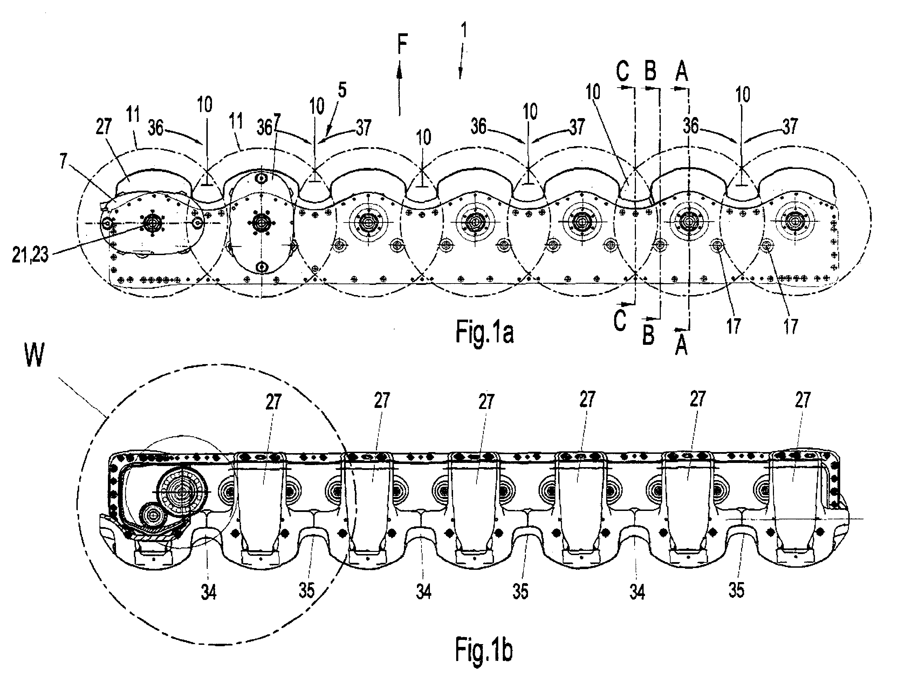

Fig.1 zeigt eine perspektivische Draufsicht auf einen freigelegten Mähbalken 1 eines erfindungsgemäßen Scheibenmähwerks mit sieben Mähscheiben 7, wobei je zwei nebeneinander liegende gegenläufig zueinender umlaufend angetriebene Mähscheiben 7 ein Mähscheibenpaar 19 bilden. Die erste Mähscheibe 7, durch die zugleich die Antriebswelle 30 für den gesamten Antriebsstrang 13 hindurch geht dreht jedoch gleichläufig zu ihrer direkt benachbarten Mähscheibe 7. Der in Fig,1 dargestellte Mähbalken 1 weist insgesamt drei Mähscheibenpaare 19 auf.

Fig.1a zeigt eine Draufsicht gemäß Ansicht Y der Fig.1 auf den Mähbalken 1 des erfindungsgemäßen Scheibenmähwerks und Fig.1b eine Untenansicht gemäß Ansicht Z der Fig.1.

Fig.1a zeigt die Draufsicht des Mähbalkens 1, der besseren Übersicht halber mit nur zwei Mähscheiben 7. Die nicht dargestellten Mähklingen beschreiben an ihren äußeren Enden Flugkreise 11, die als Konturenkreise dargestellt sind. Im vorderen Bereich des Mähbalkens überschneiden sich die Flugkreise 11 und bilden den sogenannten Zwickelbereich 10. Der Mähbalken 1 ist als komplette Einheit dargestellt und er kann prinzipiell sowohl für Seiten- als auch Frontmähwerke verwendet werden. Der Mähbalken 1 besteht im Wesentlichen aus einer Getriebewanne 2 mit umlaufendem Flansch 3 und den wellenförmigen Ausbuchtungen 5 und einem Getriebewannendeckel 4, der die Lagerungen der Mähscheiben 7 aufnimmt. Im Inneren des Mähbalkens befindet sich die Antriebskette 14 zum Antrieb der Mähscheiben. Fig1b zeigt die Unterseite des Mähbalkens 1 gemäß Ansicht Z der Fig.1 mit der Lage und Anordnung der Gleitkufen 27. Die Einzelheit X zeigt dabei noch einen Teil des offengelegten Innenraums des Antriebsgehäuses des Mähbalkens 1 mit einem Ausbruch aus dem Getriebewannenboden 8 und damit einen Teil des Antriebsstrangs 13 mit dem innen liegenden Zahnradgetriebe zum Antrieb der Mähscheiben.

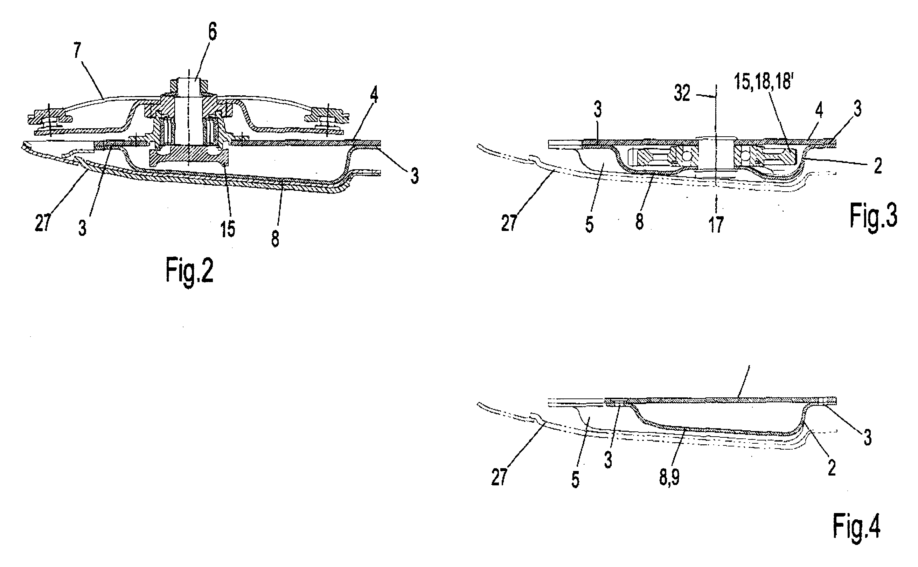

Fig.2 zeigt den Schnitt A-A, Fig.3 den Schnitt B-B und Fig.4 den Schnitt C-C durch Mähbalken gemäß Fig.1a. Der Schnitt A-A zeigt die Lagerung einer Mähscheibe 7 einschließlich des Antriebsritzels 6, welches zugleich als Stirnrad 15 ausgebildet ist, und welches mit benachbarten Stirnrädern 15, ausgebildet als Zwischenräder 18,18' der Antriebskette 14, in Eingriff steht. Angedeutet ist im Schnitt C-C auch die Kontur einer Gleitkufe 27, welches verdeutlicht, dass die Gleitkufe 27 in diesem Bereich des Getriebewannenbodens 8 deutlich von diesem beabstandet ist und welches somit den Tunneldurchgang gegenüber dem Erdboden ermöglicht. Fig. 4 zeigt den Schnitt C-C, der genau auf der Halbierenden des Abstands zwischen zwei benachbarten Mähscheiben 7 liegt. Der Getriebewannendeckel 4 und der Getriebewannenboden 8 der Getriebewanne 2 nehmen die Lagerstellen 17 der feststehenden Achsen der Zwischenräder 18,18' und des weiteren Zwischenrades 22 auf und der Getriebewannendeckel 4 nimmt die Lagestellen der Mähscheiben und dessen Antriebsritzel 6 auf. Ebenso nimmt der Getriebewannendeckel 4 die Lagerstelle 23 des Hauptantriebsritzels 21 auf, welches zugleich den Antrieb der ersten Mähscheibe mit übernimmt. In den Getriebewannenboden sind die Erhöhungen 9 und die Erhöhungen 16 für die Lagerstellen 17eingeprägt.

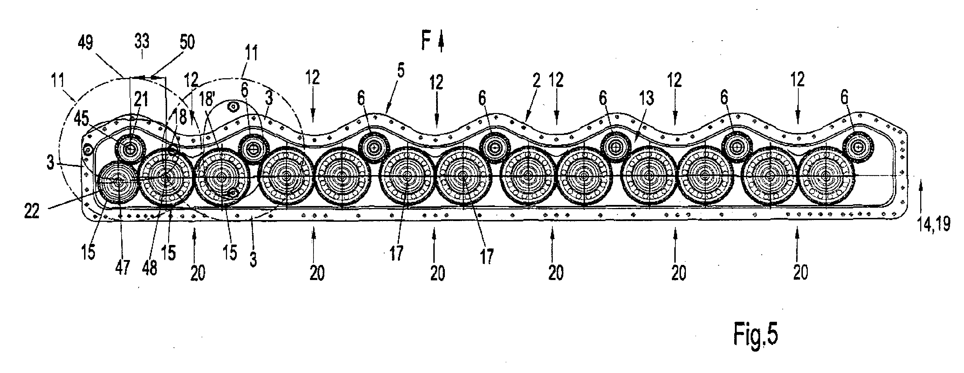

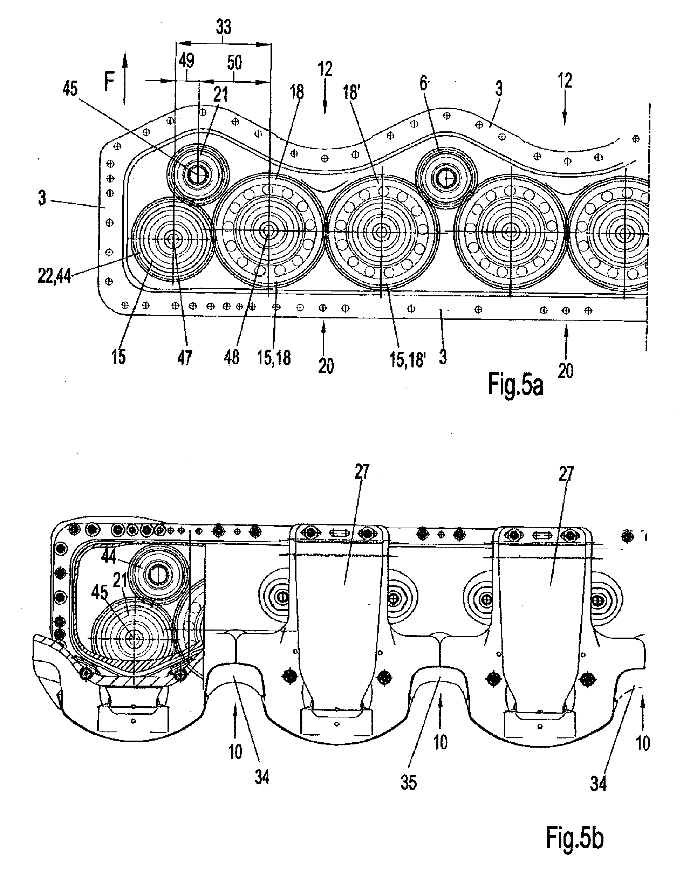

Fig.5 zeigt die Innenansicht einer offenen Getriebewanne 2 des Mähbalkens, d.h. ohne Getriebewannendeckel 4, gemäß Fig.1a mit freigelegtem Antriebsstrang 13 und einen Ausschnitt aus Fig.5 in vergrößerter Darstellung. Der Antriebsstrang 13 besteht aus in Reihe liegenden Stirnrädern 15 und Zahnritzeln 6 sowie dem Hauptantriebsritzel 21. Innerhalb der eine Reihe bildenden Stirnräder und Zahnritzel liegen die Zwischenräderpaare 20, wobei der Deutlichkeit halber die beiden Stirnräder 15, die das Zwischenräderpaar 20 bilden, zusätzlich als Zwischenräder 18,18' gekennzeichnet sind und wobei ein weiteres Stirnrad 15 als Zwischenrad 22 gekennzeichnet ist. Das Zwischenrad 22 dient lediglich der Drehrichtungsumkehr und wird zudem nachfolgend als erstes Stirnrad 44 gekennzeichnet.

Eine Besonderheit des erfindungsgemäßen Mähbalkens besteht darin, dass den zwei außen liegenden gleichsinnig drehenden Mähscheiben 7 drei Stirnräder 15 als Teil des Antriebsstrangs zugeordnet sind, wobei ein Stirnrad der drei Stirnräder 15 als Umkehrrad fungiert, wobei das Hauptantriebsritzel 21 mit einem ersten Stirnrad 44 in Eingriff und Antriebsverbindung steht, und wobei das Hauptantriebsritzel 21 in Fahrt - und Arbeitsrichtung F gesehen den Stirnrädern 15,44 vorgelagert ist, und wobei die Drehachse des Hauptantriebsritzels 45 im Bereich des quer zur Fahrtrichtung F verlaufenden Achsabstands 33 zwischen der Drehachse 47 des ersten Stirnrads 44 und der Drehachse 48 des dem mit diesem in Eingriff stehenden benachbarten Stirnrads 15 liegt.

Dabei ist die Lage der Drehachse 45 des Hauptantriebsritzels 21 innerhalb des Achsabstands 33 so, dass diese durch ein erstes Abstandsmass 49, ausgehend von der Drehachse 47 des ersten Stirnrads 44, und diese durch ein zweites Abstandsmass 50, ausgehend von der Drehachse 48 des dem mit diesem in Eingriff stehenden benachbarten Stirnrad 15, definiert ist, wobei beide Abstandsmasse 49,50 den Wert größer als Null besitzen. Bevorzugt ist die Ausführung, dass das erste Abstandsmass 49 kleiner als das zweite Abstandsmass 50 ist. In besonders vorteilhafter Weise im Sinne von Gleichteilen beinhalten die drei außenliegenden Stirnräder 15 als Teil des Antriebsstrangs 13 ein Zwischenräderpaar 20 mit den Zwischenräder 18,18', wobei alle Zwischenräderpaare 20 zwischen den beabstandeten Mähscheiben 7 untereinander gleich ausgebildet sind.

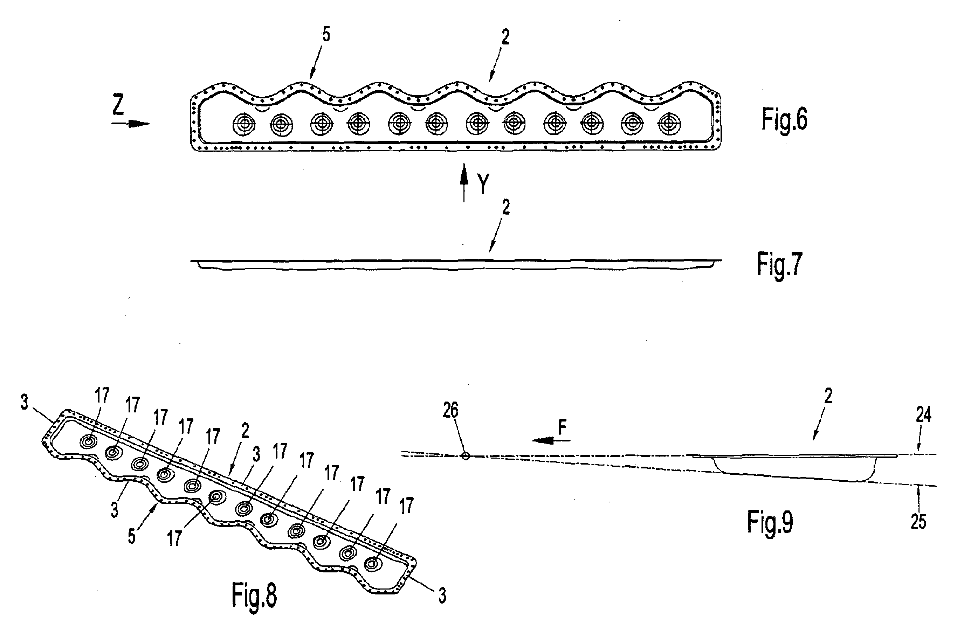

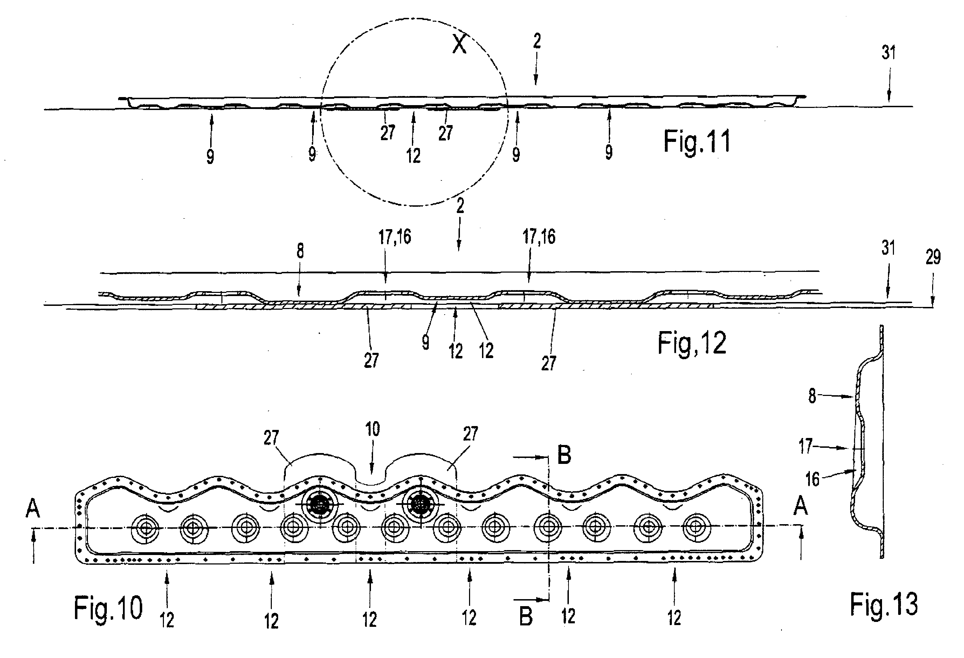

Fig.6, Fig.8 und Fig.10 zeigen die isoliert dargestellte Getriebewanne 2, wobei Fig. 7 die Ansicht in Richtung Y und Fig. 9 die Ansicht in Richtung Z zeigen. Fig. 9 macht deutlich, dass die Getriebewanne 2 von der Seite gesehen ein keilförmiges Profil aufweist, welches dadurch zum Ausdruck kommt, dass sich die Konturlinien 24,25 in Fahrt- bzw. Arbeitsrichtung F in dem Schnittpunkt 26 schneiden. In Fig.10 sind zusätzlich und beispielhaft zwei Gleitkufen 27 angedeutet, zwischen denen sich zugleich ein Teil des Zwickelbereichs 10 erstreckt.

Fig. 11 zeigt den Schnitt A-A gemäß Fig. 10 und Fig.12 zeigt einen vergrößerten Ausschnitt als Einzelheit X aus dem Schnitt A-A gemäß Fig.11. In Fig.11 ist eine Konturlinie dargestellt, die das Ausgangsplanum 31 des Getriebewannenbodens 8 symbolisiert und die somit die eingeprägten Erhöhungen 9 und 16 deutlich macht. In Fig. 12 sind auch die unter dem Getriebewannenboden 8 verlaufenden Gleitkufen 27 beispielhaft angedeutet, welche den Abstand des Getriebewannenbodens 8 zum Erdboden 29 noch vergrößern. Zwischen den Gleitkufen 27, dem Erdboden und der Erhöhung 9 im Getriebewannenboden 8 ergibt sich somit ein vergrößerter Tunneldurchgang 12, durch den sich Schmutzansammlungen ihren Weg bahnen können. Fig. 13 zeigt den Schnitt B-B gemäß Fig. 10 in einer vergrößerten Darstellung, wodurch auch die weitere eingeprägte Erhöhung 16 im Getriebewannenboden 8 deutlicher zum Ausdruck kommt.

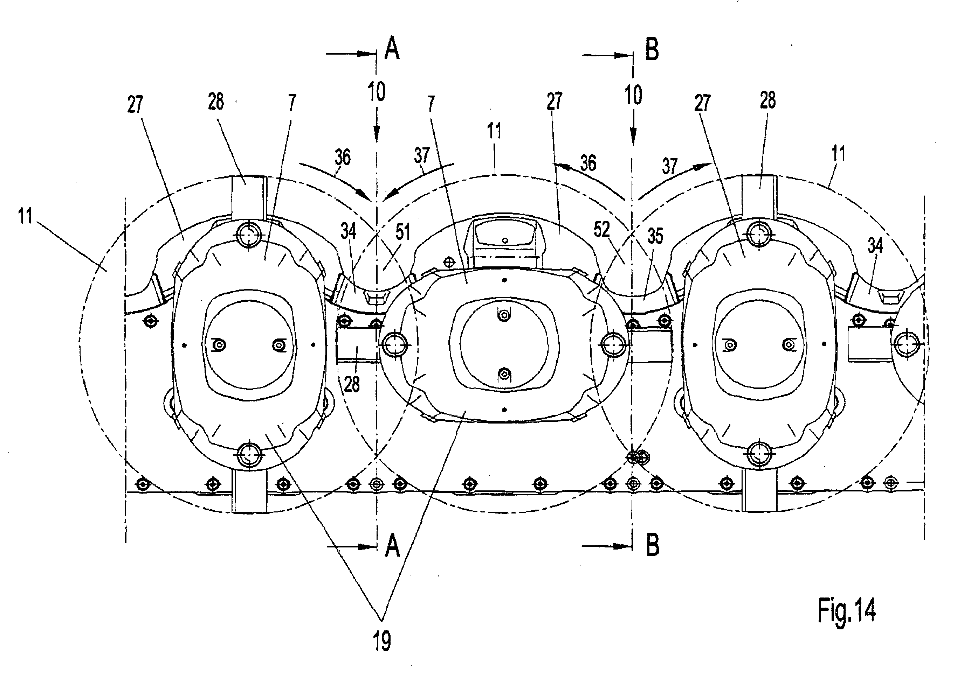

Fig.14 zeigt die Einzelheit X als vergrößerten Ausschnitt des Mähbalkens 1 aus Fig. 1 in einer Draufsicht. An den Flugkreisen 11 der Mähklingen 28 sind die Drehrichtungen 36,37 der Mähscheiben 7 angetragen, welche durch Drehrichtungspfeile gekennzeichnet sind. Dabei sind die Drehrichtungspfeile in den Zwickelbereichen 10 zwischen den Gleitkufen 27 eingetragen, so dass dadurch verdeutlicht wird, dass sich die Mähklingen 28 beider benachbarter Mähscheiben 7 in dem Mähklingeneinlaufzwickel 51 auf ihrer Umlaufbahn um die Drehachse ihrer Mähscheibe 7 auf das Gleitkufenzwischenstück 34 entgegen der Fahrrichtung F gesehen zu bewegen.

Umgekehrt hingegen bewegen sich im Mähklingenauslaufzwickel 52 die Mähklingen auf ihrer Umlaufbahn um die Drehachse ihrer benachbarten Mähscheibe 7 so, dass diese sich vom Gleitkufenzwischenstück 35 in Fahrrichtung F gesehen, im Mähklingenauslaufzwickel 52 weg bewegen. Zerlegt man die momentane Umlaufbewegung der Mähklingen 28 auf ihrer Kreisbahn im Mähklingeneinlaufzwickel 51 in ihre Bewegungskomponenten längs der Fahrtrichtung und rechtwinklig dazu, so zeigt die Bewegungsrichtungskomponente längs der Fahrtrichtung F in diesem Mähklingeneinlaufzwickel 51 in Richtung des Gleitkufenzwischenstücks 34. Eine analoge Betrachtungsweise im Mähklingenauslaufzwickel 52 führt zwangsläufig zu der Erkenntnis, dass die Bewegungskomponente längs der Fahrtrichtung F in diesem Bereich in Fahrtrichtung F und somit entgegen der Richtung des Gleitkufenzwischenstücks 35 gerichtet ist.

Für Schmutzansammlungen in diesen Mähklingeneinlauf- bzw. -auslaufzwickeln 51,52 ist dieses insofern von Bedeutung, als dass im Mähklingeneinlaufzwickel 51 der Schmutz in den Mähklingeneinlaufzwickel 51 förmlich hineingefördert wird, während er im Mähklingenauslaufzwickel 52 aus diesem herausgefördert wird. Dieser erste physikalische Effekt ist somit auf die mechanische Förderwirkung der Mähklingen 28 zurück zu führen.

Hinzu kommt der durch die Umlaufbewegung der Mähklingen 28 erzeugte physikalische Effekt der Luftströmung in diesen Zwickelbereichen. Analog der Betrachtungsweise der zuvor dargelegten Zerlegung der Umlaufbewegung der Mähklingen in und gegen die Fahrtrichtung F kommt man zwangsläufig zu dem Schluss, dass im Mähklingeneinlaufzwickel 51 die Luftströmung entgegen der Fahrtrichtung F und damit überwiegend in Richtung des Gleitkufenzwischenstücks 34 gerichtet ist und umgekehrt im Mähklingeneinlaufzwickel 51 die Luftströmung überwiegend in Fahrtrichtung F und damit weg vom Gleitkufenzwischenstück 35 gerichtet ist. Dieser zweite physikalische Effekt ist somit auf die Förderwirkung der Mähklingen 28 im Sinne von Luftschaufeln zurück zu führen.

Beide physikalischen Effekte wirken sich negativ auf das Mähbild im Sinne der zuvor beschriebenen Streifenbildung im Mähbild aus und daher sind die Gleitkufenzwischenstücke 34,35 so ausgeformt, dass sie diesen physikalischen Effekten durch unterschiedliche Formgebung in ihren unbeabsichtigten Auswirkungen kompensierend entgegen wirken.

Um diesen beiden physikalischen Effekten noch weiter entgegen zu wirken sind die Geometrien der Ausbuchtungen 40 und 41 den zuvor dargelegten Anforderungen entsprechend optimiert. Das bedeutet, dass die Geometrie der Ausbuchtung 40 des Gleitkufenzwischenstücks 34 einen stetigen Kurvenverlauf im Sinne eines Kreisbogens mit quasi konstantem Radius R1 und die Geometrie der Ausbuchtung 41 des Gleitkufenzwischenstücks 35 einen Verlauf im Sinne von drei ineinander übergehenden Kreisbögen aufweist, wobei der Radius R2 des mittleren Kreisbogens größer ist als die sich anschließenden Radien R2 der beiden äußeren Kreisbögen.

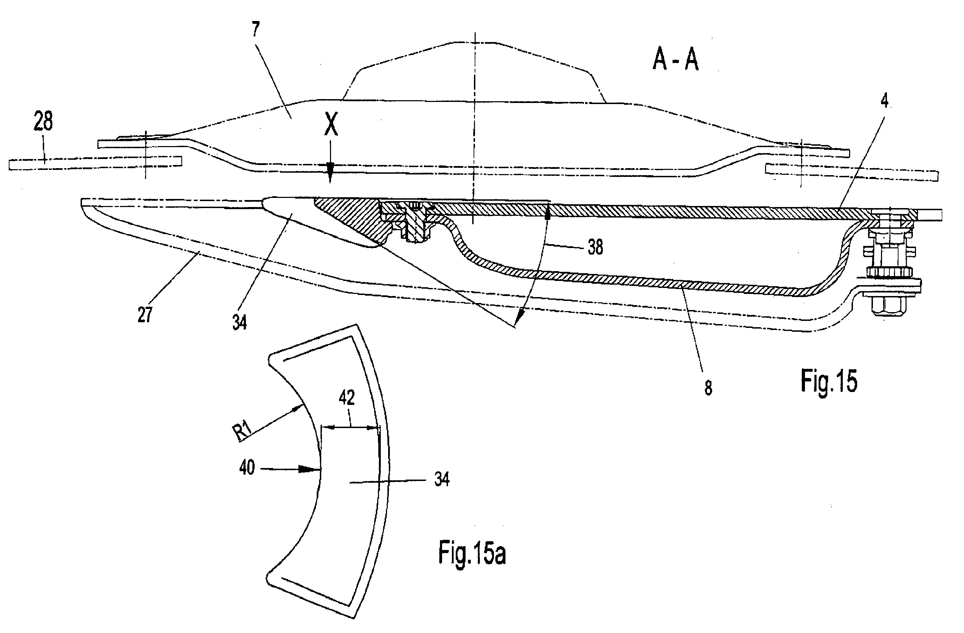

Fig.15 zeigt den Schnitt A-A durch den Mähbalken 1 im Mähklingeneinlaufzwickel 51 und damit zugleich einen Schnitt durch das Gleitkufenzwischenstück 35 mit dem Keilwinkel 38. Fig.15a zeigt das Gleitkufenzwischenstück 34 mit großem Vorbaumass 42 in einer Draufsicht von oben auf die Aufstandsfläche des Mähbalkens 1 gesehen.

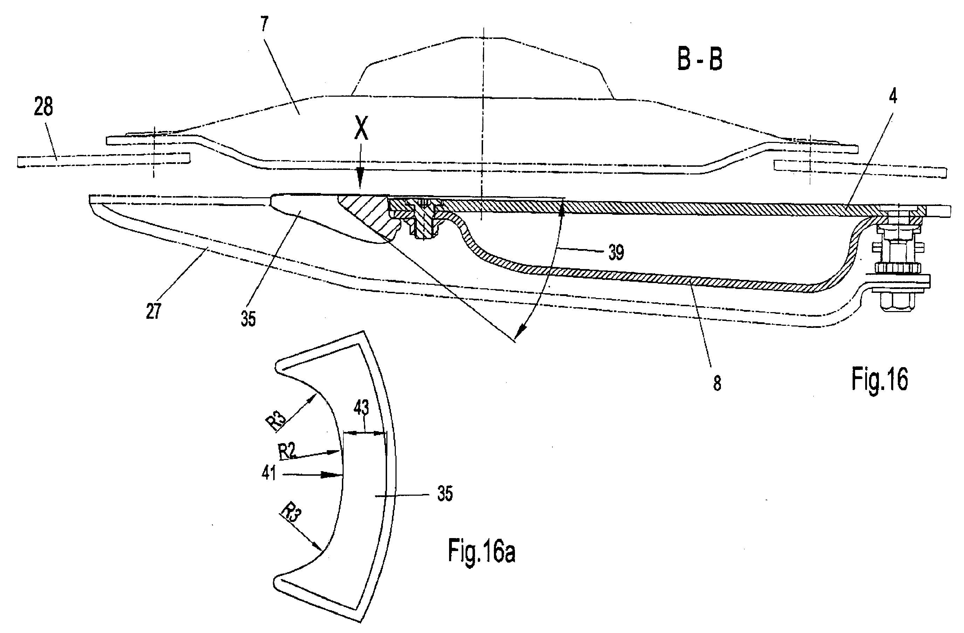

Fig.16 zeigt den Schnitt B-B durch den Mähbalken 1 im Mähklingenauslaufzwickel 52 und damit zugleich einen Schnitt durch das Gleitkufenzwischenstück 35 mit dem Keilwinkel 39. Fig.16a zeigt das Gleitkufenzwischenstück 35 mit kleinem Vorbaumaß 43 in einer Draufsicht von oben auf die Aufstandsfläche des Mähbalkens 1 gesehen.

Ein Vergleich der beiden unterschiedlich ausgeformten Gleitkufenzwischenstücke 34,35 zeigt die unterschiedlichen Vorbaumaße 42,43, die unterschiedlichen Keilwinkel 38,39 und die unterschiedlich ausgeformten Ausbuchtungen 40,41 der Gleitkufenzwischenstücke 34,35.

Es liegt im Wesen der Mähbalken 1 mit Mähscheiben, dass sich die Mähklingeneinlauf- 51 und Mähklingenauslaufzwickel 52 je nach Arbeitsbreite und Anzahl der Mähscheiben 7 des Mähbalkens alternierend wiederholen, so dass der gezeigte und beschriebene Ausschnitt bzw. die Einzelheit X des Mähbalkens 1 gemäß Fig.1 stellvertretend für alle Mähbalken 1 dieser Gattung gilt.

### Bezugszeichenliste

- 1: Mähbalken
- 2: Getriebewanne
- 3: Flansch
- 4: Getriebewannendeckel
- 5: wellenförmige Ausbuchtungen
- 6: Antriebsritzel (Zahnritzel)
- 7: Mähscheiben
- 8: Getriebewannenboden
- 9: Erhöhung
- 10: Zwickelbereich
- 11: Flugkreise (Konturenkreise)
- 12: Tunneldurchgang
- 13: Antriebsstrang (Zahnradgetriebe)
- 14: Antriebskette
- 15: Stirnräder
- 16: Erhöhung
- 17: Lagerstellen
- 18,18': Zwischenräder (Stirnräder)
- 19: Mähscheibenpaar
- 20: Zwischenräderpaar
- 21: Hauptantriebsritzel
- 22: Zwischenrad (Stirnrad)
- 23: Lagerstelle
- 24: Konturlinie
- 25: Konturlinie
- 26: Schnittpunkt
- 27: Gleitkufe
- 28: Mähklinge
- 29: Erdboden
- 30: Antriebswelle
- 31: Ausgangsplanum
- 32: Drehachsen
- 33: Achsabstand
- 34: Gleitkufenzwischenstück
- 35: Gleitkufenzwischenstück
- 36: Drehrichtung
- 37: Drehrichtung
- 38: Keilwinkel
- 39: Keilwinkel
- 40: Ausbuchtung
- 41: Ausbuchtung
- 42: Vorbaumass
- 43: Vorbaumass
- 44: erstes Stirnrad
- 45: Drehachse des Hauptantriebsritzels
- 47: Drehachse
- 48: Drehachse
- 49: Abstandsmass
- 50: Abstandsmass
- 51: Mähklingeneinlaufzwickel
- 52: Mähklingenauslaufzwickel
- F: Fahrt- bzw. Arbeitsrichtung
- R1: Radius
- R2: Radius
- R3: Radius

## Patentansprüche

1. Scheibenmähwerk mit mehreren umlaufend angetriebenen Mähscheiben (7), die einen Mähbalken (1) bilden, welcher die Lagerung der Mähscheiben (7) und die Lagerung der Antriebselemente des Antriebsstrangs (13) aufnimmt; wobei der Antriebsstrang (13) nebeneinander liegende Stirn- und Antriebsritzel umfasst, wobei der Mähbalken (1) wenigstens zwei außen nebeneinander liegende Mähscheiben (7) mit gleichsinniger Drehrichtung aufweist, wobei
a. den wenigstens zwei außenliegenden gleichsinnig drehenden Mähscheiben (7) drei Stirnräder (15,18,18'22,44) als Teil des Antriebsstrangs zugeordnet sind,
b. wobei ein erstes Stirnrad (44) als Umkehrrad fungiert,
c. wobei ein Hauptantriebsritzel (21) mit dem ersten Stirnrad (44) in Eingriff und Antriebsverbindung steht,
d. wobei das Hauptantriebsritzel (21) in Fahrt- und Arbeitsrichtung (F) gesehen den Stirnrädern (15,18,18'22,44) vorgelagert ist,
**dadurch gekennzeichnet, dass**
e. die Drehachse (45) des Hauptantriebsritzels (21) im Bereich des quer zur Fahrtrichtung (F) verlaufenden Achsabstands (33) zwischen der Drehachse (47) des ersten Stirnrads (44) und der Drehachse (48) des dem mit diesem in Eingriff stehenden benachbarten Stirnrads (15) liegt.

2. Scheibenmähwerk nach Anspruch 1, **dadurch gekennzeichnet, dass** die Drehachse (45) des Hauptantriebsritzels (21) innerhalb des Achsabstands (33) so liegt, dass diese durch ein erstes Abstandsmass (49), ausgehend von der Drehachse (47) des ersten Stirnrads (44) und ein zweites Abstandsmass (50), ausgehend von der Drehachse (48) des dem mit diesem in Eingriff stehenden benachbarten Stirnrad (15) so definiert ist, wobei beide Abstandsmasse (49,50) den Wert größer als Null besitzen.

3. Scheibenmähwerk nach Anspruch 1, **dadurch gekennzeichnet, dass** das erste Abstandsmass (49) kleiner als das zweite Abstandsmass (50) ist.

4. Scheibenmähwerk nach Anspruch 1, **dadurch gekennzeichnet, dass** die drei außen liegenden Stirnräder (15) als Teil des Antriebsstrangs ein Zwischenräderpaar (20) mit den Stirnrädern (18,18') beinhalten.

5. Scheibenmähwerk nach Anspruch 1, **dadurch gekennzeichnet, dass** alle Zwischenräderpaare (20) zwischen den beabstandeten Mähscheiben (7) untereinander gleich ausgebildet sind.

## Claims

1. A disc mower comprising a plurality of mowing discs (7) which are driven in rotation and which form a mowing bar (1) which receives the mounting of the mowing discs (7) and the mounting of the drive elements of the drive train (13), wherein the drive train (13) includes mutually juxtaposed spur and drive pinions, wherein the mowing bar (1) has at least two outwardly mutually juxtaposed mowing discs (7) with the same direction of rotation, wherein
a. three spur gears (15, 18, 18', 22, 44) are associated as part of the drive train with the at least two outwardly disposed mowing discs (7) which rotate in the same direction,
b. wherein a first spur gear (44) functions as a reversing gear,
c. wherein a main drive pinion (21) is in engagement and driving communication with the first spur gear (44), and
d. wherein the main drive pinion (21) is disposed in front of the spur gears (15, 18, 18', 22, 44) viewed in the travel and working direction (F), **characterised in that**
e. the axis of rotation (45) of the main drive pinion (21) is disposed in the region of the axis spacing (33) extending transversely to the travel direction (F) between the axis of rotation (47) of the first spur gear (44) and the axis of rotation (48) of the adjacent spur gear (15) in engagement therewith.

2. A disc mower according to claim 1 **characterised in that** the axis of rotation (45) of the main drive pinion (21) lies within the axis spacing (33) in such a way that it is so defined by a first spacing dimension (49), starting from the axis of rotation (47) of the first spur gear (44), and a second spacing dimension (50), starting from the axis of rotation (48) of the adjacent spur gear (15) in engagement therewith, wherein both spacing dimensions (49, 50) are of a value greater than zero.

3. A disc mower according to claim 1 **characterised in that** the first spacing dimension (49) is less than the second spacing dimension (50).

4. A disc mower according to claim 1 **characterised in that** the three outwardly disposed spur gears (15) as part of the drive train include a pair of intermediate gears (20) with the spur gears (18, 18').

5. A disc mower according to claim 1 **characterised in that** all pairs of intermediate gears (20) between the spaced mowing discs (7) are of the same configuration as each other.

## Revendications

1. Mécanisme de coupe à disques comportant plusieurs disques de coupe (7) entraînés en rotation qui forment une barre de coupe (1), laquelle supporte le logement des disques de coupe (7) et le logement des éléments d'entraînement de la ligne de transmission (13), la ligne de transmission (13) comprenant des pignons droits et d'entraînement juxtaposés, la barre de coupe (1) comportant au moins deux disques de coupe (7) juxtaposés extérieurement et tournant dans le même sens,
a. trois pignons droits (15, 18, 18', 22, 44) faisant partie de la ligne de transmission étant associés auxdits au moins deux disques de coupe (7) extérieurs tournant dans le même sens,
b. un premier pignon droit (44) servant de pignon inverseur,
c. un pignon d'entraînement principal (21) étant en prise et en liaison d'entraînement avec le premier pignon droit (44),
d. le pignon d'entraînement principal (21) étant placé devant les pignons droits (15, 18, 18', 22, 44) dans le sens de marche et de travail (F),
**caractérisé en ce que**
e. l'axe de rotation (45) du pignon d'entraînement principal (21) est situé dans la zone de l'entraxe (33) s'étendant transversalement au sens de marche (F) entre l'axe de rotation (47) du premier pignon droit (44) et l'axe de rotation (48) du pignon droit (15) voisin en prise avec celui-ci.

2. Mécanisme de coupe à disques selon la revendication 1, **caractérisé en ce que** l'axe de rotation (45) du pignon d'entraînement principal (21) est situé à l'intérieur de l'entraxe (33), de façon à être défini par une première mesure de distance (49) partant de l'axe de rotation (47) du premier pignon droit (44) et par une deuxième mesure de distance (50) partant de l'axe de rotation (48) du pignon droit (15) voisin en prise avec celui-ci, les deux mesures de distance (49, 50) possédant une valeur supérieure à zéro.

3. Mécanisme de coupe à disques selon la revendication 1, **caractérisé en ce que** la première mesure de distance (49) est plus petite que la deuxième mesure de distance (50).

4. Mécanisme de coupe à disques selon la revendication 1, **caractérisé en ce que** les trois pignons droits extérieurs (15) faisant partie de la ligne de transmission comprennent une paire de pignons intermédiaires (20) formée des pignons droits (18, 18').

5. Mécanisme de coupe à disques selon la revendication 1, **caractérisé en ce que** toutes les paires de pignons intermédiaires (20) entre les disques de coupe (7) espacés sont identiques entre elles.
